# EUROPEAN PATENT SPECIFICATION

(11) **EP 3 590 733 B1**
(45) Date of publication and mention of the grant of the patent: **28.10.2020**
(21) Application number: 18761337.7
(22) Date of filing: 26.02.2018
(51) Int. Cl.: B60C 11/13, B60C 11/03, B60C 19/00

(54) **TIRE**
REIFEN
PNEU

(30) Priority: 02.03.2017 JP 2017039527
(43) Date of publication of application: 08.01.2020
(73) Proprietor: Bridgestone Corporation, Tokyo 104-8340 (JP)
(72) Inventor: WATANABE, Toshiyuki, Tokyo 104-8340 (JP)
(74) Representative: Oxley, Robin John George
(86) International application number: PCT/JP2018/006979
(87) International publication number: WO 2018/159538

(56) References cited:
- EP-A1- 2 210 749
- EP-A2- 2 455 235
- DE-A1-102010 016 978
- JP-A- H0 853 004
- JP-A- H11 198 610
- JP-A- 2007 001 484
- JP-A- 2010 013 091
- JP-A- 2011 168 221
- JP-A- 2013 129 427
- JP-A- 2013 139 168
- US-A1- 2007 012 389
- US-A1- 2014 014 244

## Description

### TECHNICAL FIELD

The present disclosure relates to a tire.

### BACKGROUND

In recent years, there has been sought for quietness of a vehicle, and reduction of noise has been demanded. Noise generated by tire load rolling noticeably contributes to noise generated from a running car. Above all, tire noise of a high frequency especially around 1000 Hz is a main cause for vehicle exterior noise. Also from a viewpoint of environmental problems, a measure to reduce the noise is demanded.

This tire noise around 1000 Hz is mainly caused by air column resonance sound. The air column resonance sound is noise generated by resonance of air in a tube surrounded with a circumferential groove continuously extending in a circumferential direction of a tread surface and a road surface, and the noise is often observed in a range from about 800 to 1200 Hz in a general passenger vehicle. Such air column resonance sound has a high peak level and a broad frequency band, and accordingly occupies a large part of the noise generated from the tire.

Furthermore, human hearing is particularly sensitive to the frequency band around 1000 Hz. Therefore, also for the purpose of improving quietness to be felt during the running, it is effective to reduce the air column resonance sound.

Here, examples of the tire in which the reduction of the air column resonance sound is expected include a tire in which a side branch type resonator having a vertical groove and a lateral groove is provided in a rib-shaped land portion partitioned by a plurality of circumferential grooves (Patent Literature 1), and a tire in which Helmholtz-type resonator is provided in a land portion similar to the above land portion, the resonator having an air chamber separated from a circumferential groove and opened in the surface of the land portion, and one or more narrowed necks via which the air chamber communicates with the circumferential groove (Patent Literature 2). Attention is also drawn to the disclosures of DE102010-016978A1, US2007/012389A1, US2014/014244A1 and EP2455235A2.

### CITATION LIST

### Patent Literature

PTL 1: Japanese Patent Laid-Open No. 2011-051529
PTL 2: Japanese Patent Laid-Open No. 2014-166827

### SUMMARY

### (Technical Problem)

In the above described side branch type resonator and Helmholtz-type resonator, a large or complicated-shaped groove or recess needs to be provided in a land portion of a tread. Consequently, a degree of freedom in design of the tread is limited, and a rigidity distribution of the land portion becomes non-uniform, which might cause uneven wear.

To solve the problem, an object of the disclosure is to provide a tire that is capable of maintaining a degree of freedom in design of a tread and inhibiting uneven wear in the tread while reducing air column resonance sound.

### (Solution to Problem)

The present invention provides a tire as claimed in claim 1. According to the tire of the disclosure having such a configuration, it is possible to maintain a degree of freedom in design of a tread and to inhibit uneven wear in the tread while reducing air column resonance sound.

Here, "the tread surface" described herein means an outer peripheral surface over an entire circumference of the tire which comes in contact with a road surface when the tire which is assembled to a rim and to which a predetermined internal pressure is applied is rolled in a state where a maximum load is loaded onto the tire, and "the tread ground contact edge" means the tire width direction edge of the tread surface.

Furthermore, "a reference state" herein indicates a state where the tire is assembled to the rim, the predetermined internal pressure is applied and any load is not loaded, and "during the ground contact of the tire" indicates a time when the tire stands still on a flat road surface in the state where the tire is assembled to the rim, the predetermined internal pressure is applied and the maximum load is loaded.

The above "rim" indicates a standard rim in an applicable size (a measuring rim in Standards Manual of ETRTO, or a design rim in Year Book of TRA) which is described or to be described in future in an industrial standard valid in a district where tires are produced and used, for example, JATMA Year Book of JATMA (Japan Automobile Tyre Manufacturers Association) in Japan, ETRTO (the European Tyre and Rim Technical Organization) Standards Manual in Europe, TRA (the Tire and Rim Association, Inc.) Year Book in US or the like (i.e., the above "rim" also includes a size that can be included in the above industrial standard in future in addition to the current sizes. Examples of "the size to be described in future" include sizes described as "future developments" in ETRTO Standards Manual 2013). However, when the size is not described in the above industrial standard, the above rim refers to a rim with a width corresponding to a bead width of the tire.

Additionally, "the predetermined internal pressure" refers to an air pressure (a maximum air pressure) corresponding to a maximum load capacity of a single wheel in an applicable size ply rating as described in the above JATMA Year Book or the like. When the size is not described in the above industrial standard, "the predetermined internal pressure" refers to the air pressure (the maximum air pressure) corresponding to the maximum load capacity prescribed for each tire-installed vehicle. Furthermore, "the maximum load" refers to a load corresponding to the above maximum load capacity.

Note that air mentioned herein can be also replaced with, for example, an inert gas such as a nitrogen gas.

Furthermore, each of "the cross-sectional area of the narrowed groove" and "the cross-sectional area of the width direction groove" described herein refers to a cross-sectional area in a cross section orthogonal to an extending direction of the width direction groove having the narrowed groove, which is measured in a reference state. Additionally, "a cross-sectional area of the circumferential groove" refers to a cross-sectional area in a cross section orthogonal to an extending direction of the circumferential groove, which is measured in the reference state.

Hereinafter, it is considered that a dimension of each element such as the groove is measured in the reference state (e.g., a dimension of each element in the tread surface is measured on a developed view of the tread surface in the reference state), unless otherwise noted.

### (Advantageous Effect)

According to the disclosure, there can be provided a tire that is capable of maintaining a degree of freedom in design of a tread and inhibiting uneven wear in the tread while reducing air column resonance sound.

### BRIEF DESCRIPTION OF THE DRAWINGS

In the accompanying drawings:
FIG. 1 is a developed view schematically illustrating a tread surface of a tire according to an embodiment of the disclosure;
FIG. 2 is a cross-sectional view of a narrowed groove along line A-A of FIG. 1;
FIG. 3A is a cross-sectional view of the narrowed groove in a reference state of the tire illustrated in FIG. 1;
FIG. 3B is a cross-sectional view of the narrowed groove during ground contact of the tire illustrated in FIG. 1;
FIG. 4 is a cross-sectional view of a narrowed groove in another embodiment of the disclosure;
FIG. 5 is a cross-sectional view of a narrowed groove in still another embodiment of the disclosure;
FIG. 6 is a cross-sectional view of a narrowed groove in a further embodiment of the disclosure; and
FIG. 7 is a partially enlarged developed view of a shoulder land portion of the tire illustrated in FIG. 1.

### DETAILED DESCRIPTION

Hereinafter, embodiments of a tire according to the disclosure will be described with reference to the drawings.

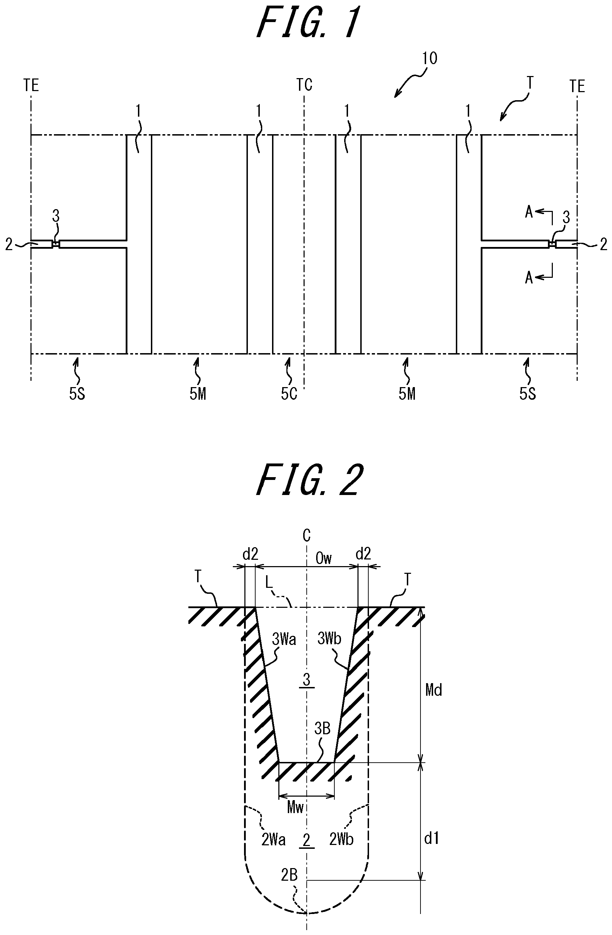

FIG. 1 is a developed view schematically illustrating a tread surface T of a tire 10 according to an embodiment of the disclosure. The tire 10 has, in the tread surface T, at least one circumferential groove 1 (four grooves in an illustrated example) continuously extending in a tire circumferential direction (extending along the tire circumferential direction, i.e., continuously extending in the tire circumferential direction at an angle of 0° to the tire circumferential direction in the illustrated example). By the four circumferential grooves 1 and both tread ground contact edges TE, there are partitioned and formed a center land portion 5C including a tire equatorial plane TC, two intermediate land portions 5M adjacent to both outer sides of the center land portion 5C in a tire width direction via the circumferential groove 1, and two shoulder land portions 5S adjacent to both outer sides of the intermediate land portions in the tire width direction via the circumferential grooves 1. Each circumferential groove 1 in the present embodiment is a linear groove extending along the tire circumferential direction and continuously in the tire circumferential direction. In the tire of the disclosure, however, the circumferential groove 1 can be a zigzag or wavy-shaped groove being inclined to the tire circumferential direction (the tire equatorial plane TC) and continuously extending in the tire circumferential direction. The tire of the disclosure may include at least one circumferential groove 1, and the tire of the present embodiment includes four circumferential grooves. However, the disclosure is not limited to this example, and it is preferable that a plurality of circumferential grooves are present. A number of circumferential grooves may be two, three, five or more.

As described above, the tire 10 of the present embodiment has, in the tread surface T, at least one circumferential groove 1 continuously extending in the tire circumferential direction, and the shoulder land portions 5S partitioned with the circumferential grooves 1 and the tread ground contact edges TE.

Note that the tire of the present embodiment is a pneumatic radial tire for passenger vehicles, but the disclosure is also applicable to another type of tire that is required to reduce air column resonance sound.

Furthermore, each shoulder land portion 5S has a plurality of width direction grooves 2 (one of which is illustrated in the illustrated example) that extend in the tire width direction, via which the circumferential groove 1 communicates with the tread ground contact edge TE, and that are arranged away from each other in the tire circumferential direction in the present embodiment, and by the width direction grooves 2, a plurality of block-shaped land portions are formed in the tire circumferential direction. This width direction groove 2 has, in the width direction groove 2, a narrowed groove 3 that communicates with the width direction groove 2 and that has a smaller cross-sectional area than the width direction groove 2. The narrowed groove 3 communicates with the width direction groove 2 at both edges of the narrowed groove 3 in an extending direction so that the width direction groove 2 can communicate with the circumferential groove 1 and the tread ground contact edge TE. The width direction groove 2 in the present embodiment has a smaller groove width at an opening edge to the tread surface than the circumferential groove 1. More specifically, the width direction groove 2 is a narrow groove with a groove width of, for example, about 2 mm, and the groove width is constant over the whole region in the tire width direction excluding a region where the narrowed groove 3 is disposed. It is preferable that the width direction groove 2 has a smaller cross-sectional area, for example, the smaller groove width at the opening edge to the tread surface as in the present embodiment and/or a smaller groove depth than the circumferential groove 1. In the present embodiment, the width direction groove 2 extends along the tire width direction (i.e., at an angle of 0° to the tire width direction), but the width direction groove 2 may be inclined and extend, for example, at an angle of 45° or less to the tire width direction as long as the groove has a component in the tire width direction.

The narrowed groove 3 will be described with reference to FIG. 2. FIG. 2 is a cross-sectional view along line A-A illustrated in FIG. 1, and illustrates a cross section of the narrowed groove 3 provided in the width direction groove 2, the cross section being formed by a plane orthogonal to the extending direction of the width direction groove 2. Note that for description herein, shapes of groove walls 2Wa and 2Wb and a groove bottom 2B of the width direction groove are illustrated with broken lines. As illustrated, the narrowed groove 3 has a smaller depth and a narrower groove width than the width direction groove 2. Groove walls 3Wa and 3Wb of the narrowed groove 3 (both groove walls that partition the narrowed groove 3) are inclined and extend in a direction approaching an opening centerline C of the width direction groove 2, toward a groove bottom 3B of the narrowed groove 3 in a depth direction. Inner edges of the groove walls in a tire radial direction are connected by the groove bottom 3B of the narrowed groove 3. Therefore, the narrowed groove 3 in the present embodiment has an inverted trapezoidal cross section.

Here, in the tire of the disclosure, the cross-sectional area of the narrowed groove 3 and a cross-sectional area of the width direction groove 2 satisfy a relational expression of "0.08 ≤ the cross-sectional area of the narrowed groove 3/the cross-sectional area of the width direction groove 2 ≤ 0.80". Specifically, in FIG. 2, it is necessary that the cross-sectional area of the narrowed groove 3 surrounded by a virtual line L smoothly connecting the tread surface T on one side of the width direction groove 2 in the tire circumferential direction to the tread surface T on the other side in the tire circumferential direction, and the groove walls 3Wa and 3Wb and the groove bottom 3B of the narrowed groove 3 is 0.08 times or more and 0.80 times or less as large as the cross-sectional area of the width direction groove 2 surrounded by the above virtual line L and the groove walls 2Wa and 2Wb and the groove bottom 2B of the width direction groove 2.

As described above, during vehicle running, air in a tube surrounded by the circumferential grooves 1 and a road surface resonates to generate resonance sound. In the tire of the disclosure, however, since the cross-sectional areas of the narrowed groove 3 and the width direction groove 2 satisfy the above relation, this resonance sound can be reduced via the narrowed groove 3. More specifically, air (sound waves) flowing into the circumferential grooves 1 to pass through the circumferential grooves 1 during the vehicle running also moves outwardly in the tire width direction via the width direction grooves 2. However, kinetic energy of the air is converted into thermal energy by a viscosity friction (friction generated by squeezing the air in the narrowed grooves 3) during the passage of the air through the narrowed grooves 3, and this thermal energy is released to outside, or absorbed by the groove walls 3Wa and 3Wb, the groove bottoms 3B and others of the narrowed grooves 3, thereby reducing the resonance sound. Thus, in the tire of the disclosure, the air column resonance sound can be reduced using a damping effect of sound waves by viscosity of air in the narrowed grooves 3, especially inlets and outlets of the grooves. Furthermore, in the tire of the disclosure, differently from a conventional branch type or Helmholtz-type resonator, a large or complicated-shaped groove or recess does not have to be provided in a tread surface, and the narrow narrowed groove 3 may only be provided in each width direction groove 2. Consequently, it is possible to maintain a degree of freedom in design of the tread. Furthermore, rigidity of the land portion of the tread is hard to become non-uniform, and hence, uneven wear in the tread surface can be inhibited. Specifically, in the tire of the disclosure, the air column resonance sound can be damped in the width direction groove 2 without providing the specific resonator in the tread surface. Consequently, it is possible to reduce the air column resonance sound without hindering the degree of freedom in design of the tread and while uniformly keeping the rigidity of the land portion of the tread. However, another resonator may be provided.

Note that when the cross-sectional area of the narrowed groove 3 is less than 0.08 times as large as the cross-sectional area of the width direction groove 2, a sufficient amount of air cannot pass through the narrowed groove 3, and a damping effect in the narrowed groove 3 cannot be obtained. Consequently, the air column resonance sound cannot be reduced. Furthermore, when the cross-sectional area of the narrowed groove 3 is in excess of 0.8 times as large as the cross-sectional area of the width direction groove 2, air cannot be sufficiently squeezed in the narrowed groove 3, and the damping effect in the narrowed groove 3 decreases. Consequently, the air column resonance sound cannot be reduced as expected.

From a viewpoint of further reducing the air column resonance sound, it is preferable that the cross-sectional area of the narrowed groove 3 is 0.5 times or less as large as the cross-sectional area of the width direction groove 2. This is because when the cross-sectional area is 0.5 times or less, the damping effect in the narrowed groove 3 increases, and the air column resonance sound is further reduced. For similar reasons, it is further preferable that the cross-sectional area of the narrowed groove 3 is 0.4 times or less as large as the cross-sectional area of the width direction groove 2.

Note that although not illustrated, in the tire of the disclosure, the cross-sectional area of the narrowed groove changes along the extending direction of the narrowed groove. In this case, it is considered that the cross-sectional area of the narrowed groove at a boundary position between the narrowed groove and the width direction groove that communicates with the narrowed groove is the cross-sectional area of the narrowed groove. When the cross-sectional area of the width direction groove changes along the extending direction of the width direction groove, it is considered that a maximum cross-sectional area of the groove is the cross-sectional area of the width direction groove.

The cross-sectional area of the width direction groove and the cross-sectional area of the narrowed groove may continuously and smoothly change at the boundary position between both the grooves. However, from a viewpoint of increasing a reduction effect of the air column resonance sound, it is preferable that the cross-sectional areas do not continuously or smoothly change at the boundary position between both the grooves. Furthermore, from a similar viewpoint, it is further preferable that the cross-sectional area of the width direction groove rapidly decreases to reach the narrowed groove so that the cross-sectional area of the narrowed groove to the cross-sectional area of the width direction groove, for example, at a position (also including the boundary position) that is 1.0 mm or less away from the boundary position between both the grooves on a side of the width direction groove in the extending direction of the width direction groove has the above described predetermined cross-sectional area ratio. However, from the viewpoint of further increasing the reduction effect of the air column resonance sound, it is especially preferable that the cross-sectional area of the width direction groove and the cross-sectional area of the narrowed groove change intermittently at the boundary position between both the grooves (the cross-sectional area of the width direction groove is different from the cross-sectional area of the narrowed groove at the boundary position (in the interface)) as in the present embodiment.

Further in the tire according to the disclosure, it is preferable that a distance d1 between the groove bottom 3B of the narrowed groove 3 and the groove bottom 2B of the width direction groove 2 is 1.0 mm or more. This is because air flowing in the vicinity of the groove bottom 2B of the width direction groove 2 is affected by friction with the groove bottom 2B to flow at a low speed, while air flows through a region 1 mm or more away from the groove bottom 2B at a sufficiently high speed. This air layer having a sufficiently high speed passes through the narrowed groove 3, thereby improving the damping effect by the viscosity. The air column resonance sound can be further reduced.

Additionally, it is preferable that a distance d2 between the groove wall 3Wa, 3Wb of the narrowed groove 3 and the groove wall 2Wa, 2Wb of the width direction groove 2 is 0.25 mm or more. This is because air flowing in the vicinity of the groove wall 2Wa, 2Wb of the width direction groove 2 is affected by friction with the groove wall 2Wa, 2Wb to flow at a low speed, while air flows through a region 0.25 mm or more away from the groove wall 2Wa, 2Wb at a comparatively high speed. This air having the comparatively high speed passes through the narrowed groove 3, thereby improving the damping effect by the viscosity. The air column resonance sound can be further reduced.

Note that each of "the distance between the groove bottom of the narrowed groove and the groove bottom of the width direction groove" and "the distance between the groove wall of the narrowed groove and the groove wall of the width direction groove" refers to the shortest length between both the groove bottoms or between both the groove walls.

Furthermore, it is preferable that at least a part of the surface of the groove wall 3Wa, 3Wb of the narrowed groove 3 is subjected to concavo-convex processing, to set an arithmetic average roughness Ra of the surface to 1.0 µm or more and 5.0 µm or less. This is because, in this case, energy loss in the narrowed groove 3 increases and the air column resonance sound can be further reduced. Note that "the arithmetic average roughness Ra" is "the arithmetic average roughness Ra" prescribed in JIS B 0601 (2001), and a unit length is obtained as 10 mm.

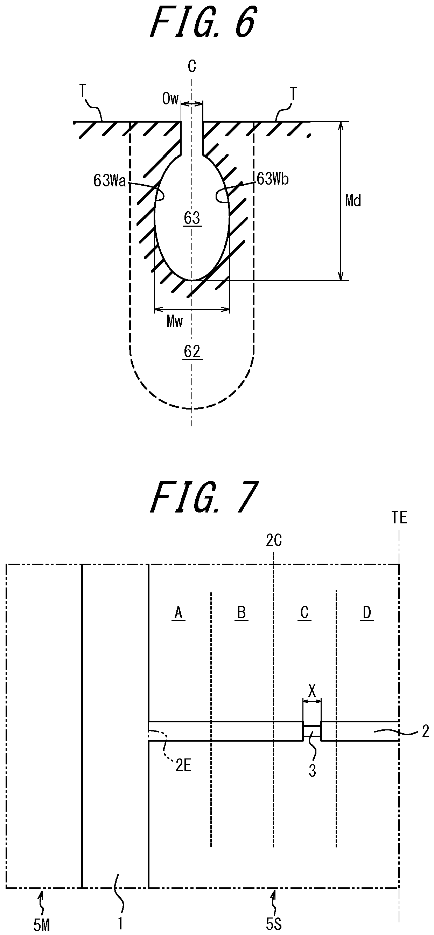

Furthermore, it is preferable that an extending length X (see FIG. 7) of the narrowed groove 3 along the width direction groove 2 is 1.0 mm or more and 3.0 mm or less. When the length is 1.0 mm or more, it is possible to inhibit decrease of rigidity of the shoulder land portion 5S due to the provision of the width direction groove 2. Additionally, the above described damping effect in the narrowed groove 3 is not especially proportional to the extending length X, and it is sufficient that the length is 3.0 mm or less.

In addition, it is possible to dispose the narrowed groove 3 in the width direction groove 2 having an arbitrary groove width. In particular, the groove is provided in the width direction groove 2 having the comparatively small groove width, i.e., the groove width of 1.0 mm or more and 3.0 mm or less, whereby it is possible to further effectively reduce the air column resonance sound while inhibiting the decrease of the rigidity of the shoulder land portion 5S due to the provision of the width direction groove 2.

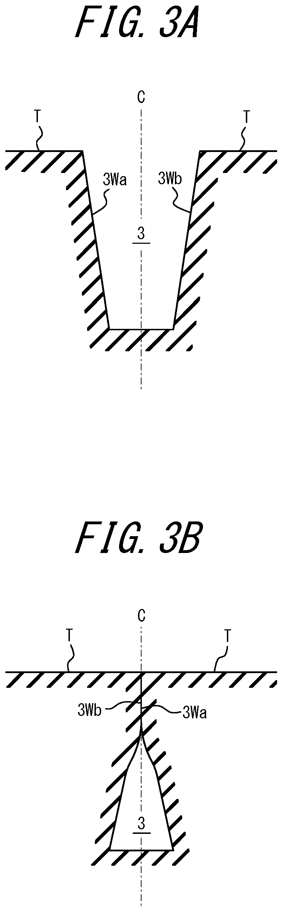

Furthermore, in the tire of the disclosure, the shape of a cross section of the narrowed groove 3 orthogonal to the extending direction of the width direction groove 2 is not limited to the inverted trapezoidal shape, and can be an arbitrary shape. However, to obtain technological effects of the disclosure, the narrowed groove 3 needs to have a shape that is hard to at least completely close during the ground contact of the tire. In the present embodiment, as illustrated in FIG. 3A, the narrowed groove 3 has an inverted trapezoidal cross section in a reference state. However, as illustrated in FIG. 3B, due to collapsing of the tread land portion during the ground contact of the tire, the groove walls 3Wa and 3Wb of the narrowed groove 3 come in contact with each other on a side of the tread surface T, and the narrowed groove 3 only partially closes.

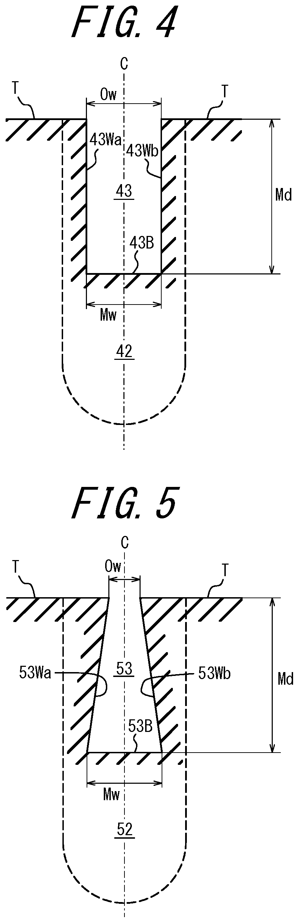

FIG. 4 illustrates a narrowed groove 43 in another embodiment of the disclosure as an example of the shape of the narrowed groove that is hard to close even during the ground contact of the tire. The narrowed groove 43 has a rectangular cross section with long sides extending along a groove depth direction. Specifically, groove walls 43Wa and 43Wb of the narrowed groove 43 extend toward a groove bottom along an opening centerline C of a width direction groove 42, and inner edges of the groove walls 43Wa and 43Wb in a tire radial direction are connected by a groove bottom 43B. Note that in this example, a ratio of a groove width Ow of the narrowed groove 43 at an opening edge to a tread surface T (the groove width orthogonal to an extending direction of the narrowed groove 43, i.e., a length in a tire circumferential direction in the present embodiment. This also applies below.), a groove width Mw in the groove bottom 43B, and a groove depth Md (a length in the tire radial direction) is 1:1:3. More specifically, in the present embodiment, for example, Ow = Mw = 1 mm, and Md = 3 mm.

FIG. 5 similarly illustrates a narrowed groove 53 in still another embodiment of the disclosure as an example of the shape of the narrowed groove that is hard to close even during the ground contact of the tire. The narrowed groove 53 has a trapezoidal cross section. Specifically, groove walls 53Wa and 53Wb of the narrowed groove 53 extend away from an opening centerline C of a width direction groove 52, toward a side of a groove bottom 53B of the narrowed groove 53 in a depth direction, and inner edges of the groove walls 53Wa and 53Wb in a tire radial direction are connected by the groove bottom 53B. Note that in this example, a ratio of a groove width Ow at an opening edge to the tread surface T, a groove width Mw in the groove bottom 53B and a groove depth Md of the narrowed groove 53 is 1:3:8. More specifically, in the present embodiment, for example, Ow = 0.5 mm, Mw = 1.5 mm, and Md = 4 mm. Note that the ratio can be 1:2:6 (e.g., Ow = 0.5 mm, Mw = 1 mm, and Md = 3 mm) or the like.

FIG. 6 similarly illustrates a narrowed groove 63 in a further embodiment of the disclosure as an example of the shape of the narrowed groove that is hard to close even during the ground contact of the tire. The narrowed groove 63 has a cross section including a rectangular inlet portion opened in a tread surface T and an elliptic main body portion adjacent to an inner edge of the inlet portion in a tire radial direction. Note that in this example, a ratio of a groove width Ow at an opening edge to the tread surface T, a groove width Mw of the main body portion and a groove depth Md of the narrowed groove 63 is 1:3:8. More specifically, in the present embodiment, for example, Ow = 0.5 mm, Mw = 1.5 mm, and Md = 4 mm.

Note that in the narrowed groove 3 having the inverted trapezoidal cross section illustrated in FIG. 2, a ratio of a groove width Ow at an opening edge to a tread surface T, a groove width Mw in the groove bottom 3B, and a groove depth Md of the narrowed groove 3 is 3 or more:2:6. More specifically, in the present embodiment, for example, Ow = 1.5 mm or more, Mw = 1 mm, and Md = 3 mm.

As described above, the groove width of the narrowed groove may be identical over the whole region including the opening edge to the tread surface T in the depth direction as in the narrowed groove 43 illustrated in FIG. 4. However, the groove width of the opening edge to the tread surface T may be different from the groove width of at least a part of the region in the depth direction, for example, as in the narrowed groove 3, the narrowed groove 53 and the narrowed groove 63 illustrated in FIG. 2, FIG. 5 and FIG. 6. The latter (the groove width of the narrowed groove at the opening edge to the tread surface T is different from that in at least a part of the region in the depth direction) is more preferable in that damping characteristics of resonance sound are freely adjustable regardless of the groove width of the narrowed groove at the opening edge to the tread surface T.

Note that in the above described respective embodiments, as illustrated in FIGS. 2 to 6, the narrowed groove has a symmetrical shape to the opening centerline C of the width direction groove in cross-sectional view, but may have an asymmetric shape.

Alternatively, in the above described respective embodiments, as illustrated in FIGS. 1 to 6, only one narrowed groove is provided in one width direction groove, but a plurality of narrowed grooves may be provided together in the same extending region or different extending regions in the one width direction groove. In this case, it is considered that "the cross-sectional area of the narrowed groove" in "the cross-sectional area of the narrowed groove/the cross-sectional area of the width direction groove" described above is a cross-sectional area of each of the individual narrowed grooves.

Furthermore, in the above described respective embodiments, as illustrated in FIG. 1 and after-mentioned FIG. 7, the narrowed groove extends along the extending direction of the width direction groove in developed view of the tread surface (i.e., at the angle of 0° to the extending direction of the width direction groove), but the groove does not have to extend along the width direction groove as long as the narrowed groove communicates with the width direction groove at both edges of the narrowed groove in the extending direction thereof. However, from a viewpoint of sufficiently acquiring flow of air outwardly in the tire width direction and more sufficiently acquiring the reduction effect of the air column resonance sound by the narrowed groove, it is preferable that the narrowed groove extends along the extending direction of the width direction groove.

Additionally, as described above, it is considered that the narrowed groove is the groove opened to the tread surface, but the narrowed groove may be replaced with a communication hole that communicates with the width direction groove at both edges in an extending direction and that is not opened to the tread surface. However, it is necessary that the communication hole does not completely close even during the ground contact of the tire in the same manner as in the narrowed groove of each of the above described embodiments.

Furthermore, FIG. 7 is a partially enlarged view of the shoulder land portion 5S illustrated in FIG. 1.

As illustrated in FIG. 7, an edge of a narrowed groove 3 on a circumferential groove 1 side is located on an outer side from a middle point 2C between a tire width direction inner edge 2E of a width direction groove 2 and a tread ground contact edge TE in a tire width direction (a middle point of a line segment connecting the tire width direction inner edge 2E of the width direction groove 2 to the tread ground contact edge TE). This is because flow of air in the width direction groove 2 on the circumferential groove 1 side from the narrowed groove 3 can be further sufficiently acquired, air flowing into the narrowed groove 3 flows at a higher speed, a damping effect by viscosity increases, and air column resonance sound can be further reduced in a case where the edge of the narrowed groove 3 on the circumferential groove 1 side is located on the outer side from the above middle point 2C in the tire width direction, as compared with a case where the edge of narrowed groove 3 on the circumferential groove 1 side is located on the above middle point or on an inner side of the above middle point 2C in the tire width direction.

Furthermore, as illustrated in FIG. 7, it is preferable that at least a part of the narrowed groove 3 is located in a second-outermost tire width direction region C in the tire width direction among four tire width direction regions A, B, C and D formed by dividing a tire width direction distance between the tire width direction inner edge 2E of the width direction groove 2 and the tread ground contact edge TE into four equal regions. In this case, the narrowed groove 3 is always disposed in a tread footprint, so that the reduction effect of the air column resonance sound by the narrowed groove 3 can be further securely obtained.

Additionally, in the tire of the disclosure, it is preferable to dispose two or more width direction grooves 2 each having the narrowed groove 3 in a tire footprint (the surface of the tire that comes in contact with the road surface during the ground contact), and it is further preferable to dispose four or more width direction grooves. Note that the damping effect of the resonance sound by the narrowed groove 3 is proportional to the number of the width direction grooves 2 each having the narrowed groove 3 to be disposed, but from a viewpoint that rigidity of the shoulder land portion 5S is not excessively decreased, it is preferable to dispose six or less width direction grooves.

Note that in the example illustrated in FIG. 1, a groove, a sipe or the like other than the width direction groove 2 and the narrowed groove 3 is not disposed in the shoulder land portion 5S. For example, various types of grooves or sipes can be arbitrarily provided in accordance with expected tire properties. For example, another width direction groove that is wider than the width direction groove 2 can be provided besides the width direction groove 2 provided with the narrowed groove 3. For example, various types of grooves or sipes can be similarly arbitrarily provided also in the center land portion 5C and the intermediate land portions 5M in accordance with an expected tire property.

### EXAMPLES

Hereinafter, examples of the disclosure will be described, but the disclosure is not limited to the following examples.

### [Test 1]

An example tire and a comparative example tire (both had a tire size of 215/55 R17) were experimentally produced on specifications illustrated in Table 1, and a reduction effect of air column resonance sound (quietness) was evaluated.

Each of example tires 1-1 to 1-12 is provided with a tread pattern illustrated in FIG. 1, has four circumferential grooves in a tread surface, and includes a plurality of width direction grooves, via which the circumferential grooves and tread ground contact edges that partition land portions communicate with one another, in rib-shaped land portions partitioned by the circumferential grooves on both outermost sides in a tire width direction among the circumferential grooves and the tread ground contact edges (shoulder land portions 5S in the above described embodiments). The tire has, in each width direction groove, a narrowed groove having a smaller cross-sectional area than the width direction groove. Example tire 1-10 and 1-11 are not according to the present invention.

A comparative example tire 1-1 is a tire similar to the example tire 1-1 except that the tire does not have the width direction groove and the narrowed groove.

A comparative example tire 1-2 has four circumferential grooves in a tread surface, and includes a plurality of Helmholtz-type resonators in two rib-shaped land portions that do not include any tire equatorial planes (which correspond to intermediate land portions 5M in the above described embodiments) among three rib-shaped land portions partitioned by the circumferential grooves. Both circumferential grooves that partition the land portion communicate with each other via the resonator.

A comparative example tire 1-3 is a tire similar to the example tire 1-1 except that the tire does not have the narrowed groove in the width direction groove.

Comparative example tires 1-4 and 1-5 are tires similar to the example tire 1-1 except that a cross-sectional area of a narrowed groove is comparatively large or small.

Each sample tire was assembled to a rim 7.5J to form a tire wheel, and an air pressure of 230 kPa (an equivalent pressure) and a tire load of 4.46 kN were applied. During running on an indoor drum tester at an hourly speed of 80 km/h, tire outer sound was measured on conditions prescribed in JASO C606 standard, to compute a partial overall value in a 1/3 octave center frequency 800-1000-1250 Hz band, thereby calculating air column resonance sound. Table 1 illustrates the result of a reduction amount (dB) to the comparative example tire 1-1.

**[Table 1]**

| | Cross-sectional area of narrowed groove/cross-sectional area of width direction groove | Width of width direction groove (mm) | Distance d1 between groove bottoms (mm) | Distance d2 between groove walls (mm) | Region where narrowed groove is disposed | Reduction amount of air column resonance sound (dB) |
|---|---|---|---|---|---|---|
| Comparative example tire 1-1 | - | - | - | - | - | 0 |
| Comparative example tire 1-2 | - | - | - | - | - | 2.8 |
| Comparative example tire 1-3 | - | - | - | - | - | -0.5 |
| Comparative example tire 1-4 | 0.05 | 2 | 3 | 0.25 | C | 0.3 |
| Example tire 1-1 | 0.08 | 2 | 3 | 0.25 | C | 1.2 |
| Example tire 1-2 | 0.3 | 2 | 3 | 0.25 | C | 2.7 |
| Example tire 1-3 | 0.4 | 2 | 3 | 0.25 | C | 2.2 |
| Example tire 1-4 | 0.5 | 2 | 3 | 0.25 | C | 2 |
| Example tire 1-5 | 0.6 | 2 | 3 | 0.25 | C | 1.5 |
| Example tire 1-6 | 0.8 | 2 | 3 | 0.25 | C | 1 |
| Comparative example tire 1-5 | 0.9 | 2 | 3 | 0.25 | C | 0.7 |
| Example tire 1-7 | 0.3 | 2 | 0 | 0.25 | C | 0.3 |
| Example tire 1-8 | 0.3 | 2 | 1 | 0.25 | C | 1 |
| Example tire 1-9 | 0.3 | 2 | 3 | 0 | C | 0.7 |
| Example tire 1-10 | 0.3 | 2 | 3 | 0.25 | A | 0.3 |
| Example tire 1-11 | 0.3 | 2 | 3 | 0.25 | B | 0.4 |
| Example tire 1-12 | 0.3 | 2 | 3 | 0.25 | D | 0.7 |

### [Test 2]

There was evaluated a difference in a reduction effect of air column resonance sound due to a number of width direction grooves each having a narrowed groove to be disposed.

An example tire 2-1 is basically provided with a tread pattern illustrated in FIG. 1, has four circumferential grooves in a tread surface, and includes a plurality of width direction grooves, via which the circumferential grooves and tread ground contact edges that partition land portions communicate with one another, in rib-shaped land portions partitioned by the circumferential grooves on both outermost sides in a tire width direction among the circumferential grooves and the tread ground contact edges (shoulder land portions 5S in the above described embodiments). The tire has, in each width direction groove, a narrowed groove having a smaller cross-sectional area than the width direction groove. Note that a number of width direction grooves each having the narrowed groove entering a tire footprint is one for each of the rib-shaped land portions on both the sides in the tire width direction.

A comparative example tire 2-1 is similar to the example tire 2-1 except that a width direction groove does not have therein a narrowed groove.

Example tires 2-2 to 2-5 are similar to the example tire 2-1 except that a number of width direction grooves each having a narrowed groove entering a tire footprint is from two to five for each of rib-shaped land portions on both sides in a tire width direction.

Test and evaluation methods of a sample tire are similar to those of test 1.

Table 2 illustrates the result of a reduction amount (dB) to the comparative example tire 2-1.

**[Table 2]**

| | Cross-sectional area of narrowed groove/cross-se ctional area of width direction groove | Width of width direction groove (mm) | Presence/absence of narrowed groove | Number of width direction grooves in footprint (grooves) | Reduction amount of air column resonance sound (dB) |
|---|---|---|---|---|---|
| Comparative example tire 2-1 | 0.3 | 2 | None | 1 | 0 |
| Example tire 2-1 | 0.3 | 2 | Present | 1 | 1.5 |
| Example tire 2-2 | 0.3 | 2 | Present | 2 | 1.8 |
| Example tire 2-3 | 0.3 | 2 | Present | 3 | 2.2 |
| Example tire 2-4 | 0.3 | 2 | Present | 4 | 2.6 |
| Example tire 2-5 | 0.3 | 2 | Present | 5 | 2.8 |

### REFERENCE SIGNS LIST

1 circumferential groove
2 width direction groove
2B groove bottom of the width direction groove
2C middle point between a tire width direction inner edge of the width direction groove and a tread ground contact edge
2E tire width direction inner edge of the width direction groove
2Wa and 2Wb groove wall of the width direction groove
3, 43, 53, and 63 narrowed groove
3B, 43B, 53B and 63B groove bottom of the narrowed groove
3Wa, 3Wb, 43Wa, 43Wb, 53Wa, 53Wb, 63Wa and 63Wb groove wall of the narrowed groove
5C center land portion
5M intermediate land portion
5S shoulder land portion
10 tire
T tread surface
TC tire equatorial plane
TE tread ground contact edge
X extending length of the narrowed groove

## Claims

1. A tire (10) having, in a tread surface (T), at least one circumferential groove (1) continuously extending in a tire circumferential direction, and a shoulder land portion (5S) partitioned with the circumferential groove (1) and a tread ground contact edge (TE), wherein
the shoulder land portion (5S) has a width direction groove (2) that extends in a tire width direction and via which the circumferential groove (1) communicates with the tread ground contact edge (TE),
the width direction groove (2) has, in the width direction groove (2), a narrowed groove (3) that communicates with the width direction groove (2) and that has a smaller cross-sectional area than the width direction groove (2),
the cross-sectional area of the narrowed groove (3) and a cross-sectional area of the width direction groove (2) satisfy the following relational expression:
0.08 ≤ the cross-sectional area of the narrowed groove (3)/the cross-sectional area of the width direction groove (2) ≤ 0.80, and
an edge of the narrowed groove (3) on a side of the circumferential groove (1) is located on an outer side from a middle point (2C) between a tire width direction inner edge of the width direction groove (2) and the tread ground contact edge (TE) in the tire width direction.

2. The tire (10) according to claim 1, wherein a distance between a groove bottom (3B) of the narrowed groove (3) and a groove bottom (2B) of the width direction groove (2) is 1.0 mm or more.

3. The tire (10) according to claim 1 or 2, wherein a distance between a groove wall (3Wa, 3Wb) of the narrowed groove (3) and a groove wall (2Wa, 2Wb) of the width direction groove (2) is 0.25 mm or more.

4. The tire (10) according to claim 1, wherein at least a part of the narrowed groove (3) is located in a second-outermost tire width direction region (C) in the tire width direction among four tire width direction regions (A, B, C, D) formed by dividing a tire width direction distance between a tire width direction inner edge (2E) of the width direction groove (2) and the tread ground contact edge (TE) into four equal regions.

## Patentansprüche

1. Reifen (10), der, in einer Lauffläche (T), mindestens eine umlaufende Rille (1), die sich durchgehend in einer Reifenumfangsrichtung erstreckt, und einen Schulterstegabschnitt (5S), der mit der umlaufenden Rille (1) und einer Laufflächen-Bodenberührungskante (TE) unterteilt wird, aufweist, wobei
der Schulterstegabschnitt (5S) eine Breitenrichtungsrille (2) aufweist, die sich in einer Reifenbreitenrichtung erstreckt und über welche die umlaufende Rille (1) mit der Laufflächen-Bodenberührungskante (TE) in Verbindung steht,
die Breitenrichtungsrille (2), in der Breitenrichtungsrille (2), eine verengte Rille (3) aufweist, die mit der Breitenrichtungsrille (2) in Verbindung steht und die eine kleinere Querschnittsfläche aufweist als die Breitenrichtungsrille (2),
die Querschnittsfläche der verengten Rille (3) und eine Querschnittsfläche der Breitenrichtungsrille (2) den folgenden Vergleichsausdruck erfüllen:
0,08 ≤ die Querschnittsfläche der verengten Rille (3)/die Querschnittsfläche der Breitenrichtungsrille (2) ≤ 0,80 und
eine Kante der verengten Rille (3) auf einer Seite der umlaufenden Rille (1) auf einer äußeren Seite von einem Mittelpunkt (2C) zwischen einer in Reifenbreitenrichtung inneren Kante der Breitenrichtungsrille (2) und der Laufflächen-Bodenberührungskante (TE) in der Reifenbreitenrichtung angeordnet ist.

2. Reifen (10) nach Anspruch 1, wobei eine Entfernung zwischen einer Rillensohle (3B) der verengten Rille (3) und einer Rillensohle (2B) der Breitenrichtungsrille (2) 1,0 mm oder mehr beträgt.

3. Reifen (10) nach Anspruch 1 oder 2, wobei eine Entfernung zwischen einer Rillenwand (3Wa, 3Wb) der verengten Rille (3) und einer Rillenwand (2Wa, 2Wb) der Breitenrichtungsrille (2) 0,25 mm oder mehr beträgt.

4. Reifen (10) nach Anspruch 1, wobei mindestens ein Teil der verengten Rille (3) in einem in der Reifenbreitenrichtung zweitäußersten Reifenbreitenrichtungsbereich (C) von vier Reifenbreitenrichtungsbereichen (A, B, C, D) angeordnet ist, die durch Teilen einer Reifenbreitenrichtungsentfernung zwischen einer in Reifenbreitenrichtung inneren Kante (2E) der Breitenrichtungsrille (2) und der Laufflächen-Bodenberührungskante (TE) in vier gleiche Bereiche gebildet werden.

## Revendications

1. Bandage pneumatique (10), comportant, dans une surface de bande de roulement (T), au moins une rainure circonférentielle (1) s'étendant en continu dans une direction circonférentielle du bandage pneumatique, et une partie d'appui d'épaulement (5S) divisée par la rainure circonférentielle (1) et un bord de contact au sol de la bande de roulement (TE), dans lequel :
la partie d'appui d'épaulement (5S) comporte une rainure dans la direction de la largeur (2) s'étendant dans une direction de la largeur du bandage pneumatique et à travers laquelle la rainure circonférentielle (1) communique avec le bord de contact au sol de la bande de roulement (TE) ;
la rainure dans la direction de la largeur (2) comporte, dans la rainure dans la direction de la largeur (2), une rainure rétrécie (3) communiquant avec la rainure dans la direction de la largeur (2) et ayant une surface de section transversale inférieure à celle de la rainure dans la direction de la largeur (2) ;
la surface de section transversale de la rainure rétrécie (3) et une surface de section transversale de la rainure dans la direction de la largeur (2) satisfont l'expression relationnelle suivante :
0,08 ≤ à la surface de section transversale de la rainure rétrécie (3)/ à la surface de section transversale de la rainure dans la direction de la largeur (2) ≤ 0,80 ; et
un bord de la rainure rétrécie (3) sur un côté de la rainure circonférentielle (1) se situe sur un côté externe d'un point médian (2C) entre un bord interne, dans la direction de la largeur du bandage pneumatique, de la rainure dans la direction de la largeur (2) et le bord de contact au sol de la bande de roulement (TE), dans la direction de la largeur du bandage pneumatique.

2. Bandage pneumatique (10) selon la revendication 1, dans lequel une distance entre un fond de rainure (3B) de la rainure rétrécie (3) et un fond de rainure (2B) de la rainure dans la direction de la largeur (2) correspond à 1,0 mm ou plus.

3. Bandage pneumatique (10) selon la revendication 1 ou 2, dans lequel une distance entre une paroi de rainure (3Wa, 3Wb) de la rainure rétrécie (3) et une paroi de rainure (2Wa, 2Wb) de la rainure dans la direction de la largeur (2) correspond à 0,25 mm ou plus.

4. Bandage pneumatique (10) selon la revendication 1, dans lequel au moins une partie de la rainure rétrécie (3) est agencée dans une deuxième région la plus externe de la direction de la largeur du bandage pneumatique (C), dans la direction de la largeur du bandage pneumatique, parmi quatre régions dans la direction de la largeur du bandage pneumatique (A, B, C, D) formées en divisant une distance dans la direction de la largeur du bandage pneumatique, entre un bord interne, dans la direction de la largeur du bandage pneumatique (2E) de la rainure dans la direction de la largeur (2) et le bord de contact au sol de la bande de roulement (TE) en quatre régions égales.
